# EUROPEAN PATENT APPLICATION

(11) **EP 4 435 306 A1**
(43) Date of publication of application: **25.09.2024**
(21) Application number: 24161715.8
(22) Date of filing: 06.03.2024
(51) Int. Cl.: F16L 3/10, F16L 33/04

(54) **CLAMP ASSEMBLY WITH MULTIPLE-DEGREE-OF-FREEDOM HINGE**

(30) Priority: 19.03.2023 US 202318186174
(71) Applicant: Krausz Industries Ltd., 4850001 Rosh HaAyin (IL)
(72) Inventor: Yamin, Bar, Rosh Haayin 4853309 (IL); Zeiman, Avishay, Rehovot 7665407 (IL)
(74) Representative: Kurig, Thomas

(57) **Abstract**

A clamp assembly (10) includes two curved clamp halves (12, 13) terminating in two clamp members (14, 16), one or more fasteners for fastening the clamp members (14, 16) towards each other so as to apply a radially-inward clamping force, and a multiple-degree-of-freedom hinge (22) that couples the clamp halves (12, 13) to each other so that the clamp halves (12, 13) can translate and rotate with respect to each other.

## Description

### FIELD OF THE INVENTION

The present invention relates generally to pipe couplings and clamp assemblies, and particularly to a clamp assembly with a multiple-degree-of-freedom hinge.

### BACKGROUND OF THE INVENTION

Many kinds of pipe couplings or clamp assemblies (the terms being used interchangeably) exist in the art. It is noted that throughout the specification and claims, the term "pipe" encompasses any kind of generally cylindrical object.

One kind of coupling is a unitary cylindrical coupling, which may be made of cast iron or other suitable material. The coupling has open upper ends that are tightened towards each other with bolts or other fasteners.

Another kind of coupling is a hinged coupling; the coupling has two halves that are hinged together opposite the open ends that are tightened together.

However, as opposed to continuous couplings in which the forces on the coupling are somewhat uniformly distributed, in hinged couplings the forces are different at the clamp ends and at the hinge ends and therebetween. The result is the forces may tend to cause the complete coupling to depart from a true circular shape, and the seal or gasket may not seal properly around the entire circumference of the pipe. The hinge must bear higher forces, which makes the hinges generally heavier and thicker.

### SUMMARY OF THE INVENTION

The present invention seeks to provide a clamp assembly with a multiple-degree-of freedom hinge, as is described more in detail hereinbelow. The multiple-degree-of freedom hinge may be integral parts of the halves of the clamp assembly, thereby saving on manufacturing and assembly costs. The hinge is much thinner than prior art hinges (the hinge is as thin as the clamp halves), thereby saving on weight and volume of the hinge, and yet the hinge can bear much higher forces than prior art hinges. The multiple-degree-of freedom hinge allows one clamp half to rotate and translate with respect to the other clamp half, which makes it easier to put the clamp on pipes.

One non-limiting application of the invention is in the Krausz EZ-MAX wide-range clamps, used for repairing holes and cracks in water and waste water pipes.

There is thus provided in accordance with an embodiment of the present invention a clamp assembly including two curved clamp halves terminating in two clamp members, one or more fasteners for fastening the clamp members towards each other so as to apply a radially-inward clamping force, and a multiple-degree-of-freedom hinge that couples the clamp halves to each other so that the clamp halves can translate and rotate with respect to each other.

In accordance with a non-limiting embodiment of the present invention the multiple-degree-of freedom hinge is formed as integral parts of the clamp halves.

In accordance with a non-limiting embodiment of the present invention the multiple-degree-of freedom hinge includes a male portion on one of the clamp halves that translates and rotates with respect to a female portion on the other clamp half.

In accordance with a non-limiting embodiment of the present invention more than one female portion is formed on the other clamp half, which allows different positions for the male portion to couple with the other clamp half.

### BRIEF DESCRIPTION OF THE DRAWINGS

The present invention will be understood and appreciated more fully from the following detailed description, taken in conjunction with the drawing in which:
Fig. 1 is a simplified pictorial illustration of a clamp assembly, constructed and operative in accordance with a non-limiting embodiment of the present invention, including two halves connected by a multiple-degree-of freedom hinge;
Fig. 2 is a side view of the clamp assembly;
Fig. 3 is a simplified pictorial illustration of the clamp assembly, with opposing clamp members brought together and in a position for final tightening;
Fig. 3A is a simplified illustration of fasteners tightening the opposing clamp members together;
Figs. 4A, 4B and 4C are simplified pictorial illustrations of a clamp assembly, constructed and operative in accordance with another non-limiting embodiment of the present invention, in which the multiple-degree-of freedom hinge has multiple positions on the two clamp halves.

### DETAILED DESCRIPTION OF EMBODIMENTS

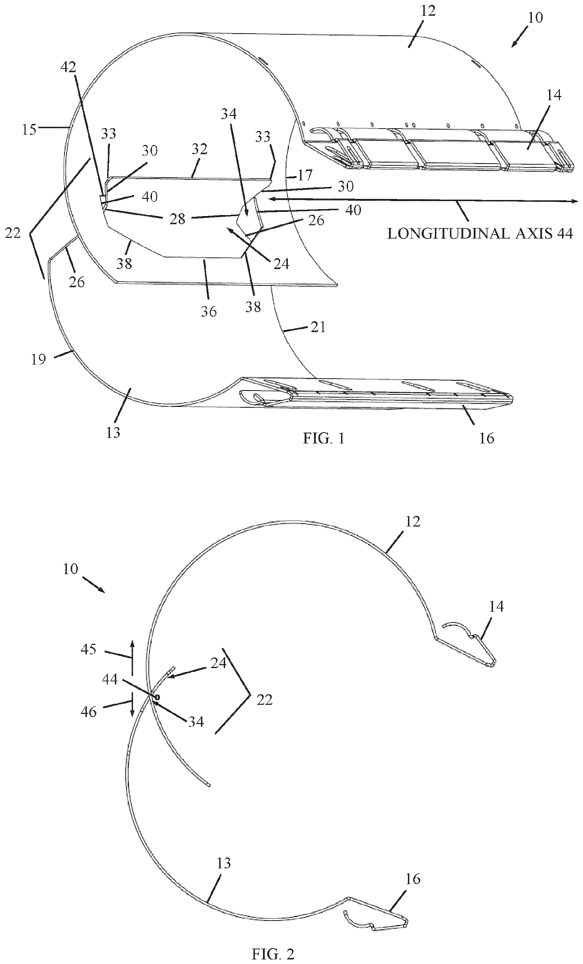

Reference is now made to Figs. 1-3, which illustrate a clamp assembly 10, constructed and operative in accordance with a non-limiting embodiment of the present invention.

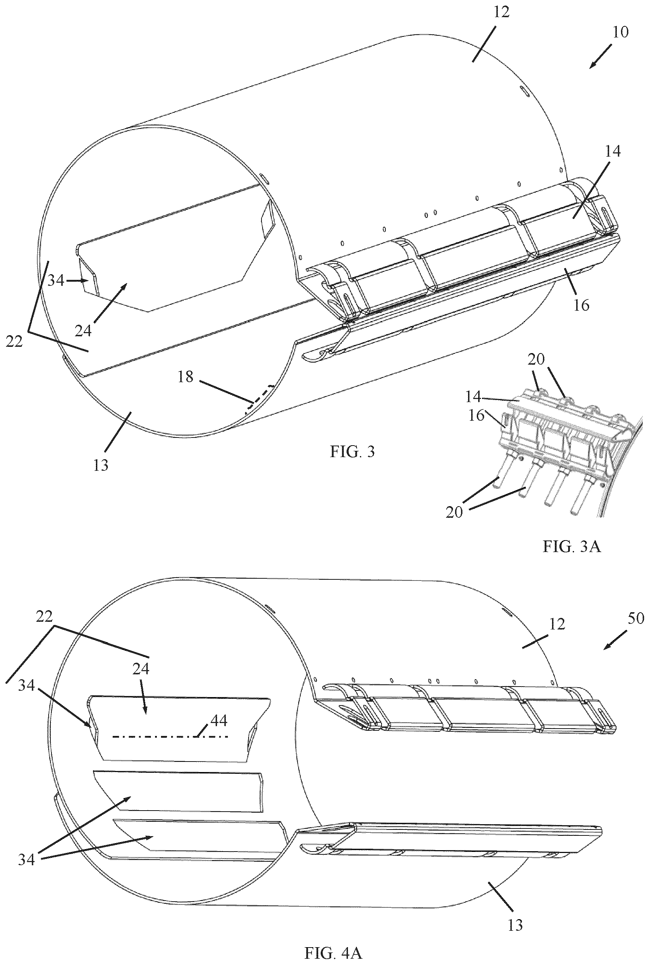

Clamp assembly 10 includes two curved resilient band halves 12 and 13 terminating in two clamp members 14 and 16. It is appreciated that the invention is not limited to just two band halves - the patent can be carried out with more than two and the term two halves is to be understood as encompassing any number of partial shapes which are referred to as "halves". The resilient band halves 12 and 13 are adapted to receive therein a cylindrical or ring elastomeric seal 18 (shown partially in broken lines in Fig. 3) that contacts an outer contour of a pipe (not shown). As seen in Fig. 3A, one or more fasteners 20, such as bolts or screws, fasten the clamp members 14 and 16 towards each other so as to apply a radially-inward clamping force on the elastomeric seal that contacts the pipe so that the clamp assembly clamps the pipe.

The band halves 12 and 13 have first and second axial end faces 15/17 and 19/21, respectively.

Reference is made particularly to Fig. 1. In accordance with a non-limiting embodiment of the present invention, the two band halves 12 and 13 are connected by a multiple-degree-of-freedom hinge 22. Hinge 22 may be constructed as integral parts of the halves 12 and 13. In the non-limiting illustrated embodiment, hinge 22 has a male portion 24 that includes axially-inward sloping edges 26 (they are axially tilted inwards from first and second axial end faces 19 and 21 of band half 13), from which extend circumferential edges 28, which are axially separated from each other, from which extend axially-outward sloping edges 30, which are axially separated from each other. The male portion 24 terminates in a terminal edge 32, coupled to axially-outward sloping edges 30 at corners 33, which are preferably rounded.

In the non-limiting illustrated embodiment, hinge 22 has a female portion 34 that includes a cutout portion of band half 12, including a first boundary cutout edge 36, from which extend axially-outward sloping cutout edges 38, which are axially separated from each other, from which extend circumferential cutout edges 40, which are axially separated from each other. The female portion 34 terminates in a second boundary cutout edge 42 extending between circumferential cutout edges 40.

The multiple-degree-of freedom hinge 22 allows the two band halves 12 and 13 to pivot (rotate) about a longitudinal axis 44 of the clamp assembly 10. The longitudinal axis 44 is shown perpendicular to the drawing sheet in Fig. 2. As seen in Fig. 2, the multiple-degree-of freedom hinge 22 allows clamp half 12 to rotate and translate with respect to the other clamp half 13. Rotation is about longitudinal axis 44. It is noted that the hinge 22 allows the two band (clamp) halves 12 and 13 to translate can translate up and down as indicated by arrows 45 and 46; by doing so, the position of longitudinal axis 44 can move up and down as indicated by arrows 45 and 46. The ability to translate is due to the freedom of male portion 24 to translate with respect to female portion 34.

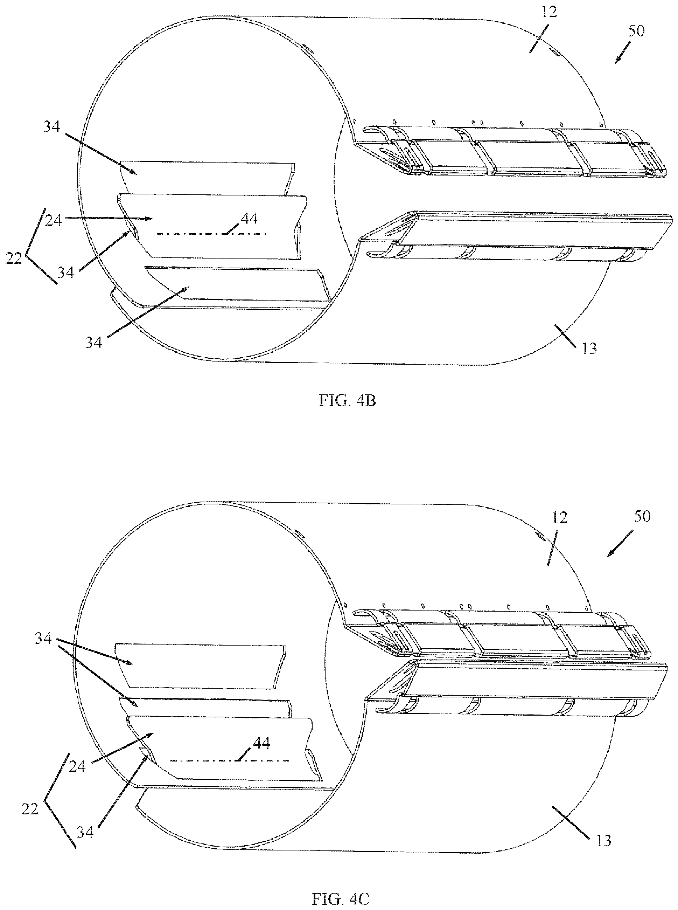

Reference is now made to Figs. 4A, 4B and 4C, which illustrate a clamp assembly 50, constructed and operative in accordance with another non-limiting embodiment of the present invention. Clamp assembly 50 is similar to clamp assembly 10, with like elements designated by like numerals. Clamp assembly 50 differs from clamp assembly 10, in that the multiple-degree-of freedom hinge 22 has multiple positions. This may be achieved by forming more than one female portion 34 on clamp half 12 which allows different positions for the male portion 24 to couple with clamp half 12. This embodiment further increases the ability of the clamp halves to rotate and translate with respect to each other.

## Claims

1. A clamp assembly (10) comprising:
two curved clamp halves (12, 13) terminating in two clamp members (14, 16);
one or more fasteners (20) for fastening said clamp members (14, 16) towards each other so as to apply a radially-inward clamping force; and
a multiple-degree-of freedom hinge (22) that couples said clamp halves (12, 13) to each other so that said clamp halves (12, 13) can translate and rotate with respect to each other.

2. The clamp assembly (10) according to claim 1, wherein said multiple-degree-of-freedom hinge (22) is formed as integral parts of said clamp halves (12, 13).

3. The clamp assembly (10) according to claim 1 or claim 2, wherein said multiple-degree-of-freedom hinge (22) comprises a male portion (24) on one of said clamp halves (13) that translates and rotates with respect to a female portion (34) on said other clamp half (12).

4. The clamp assembly (50) according to claim 3, wherein more than one female portion (34) is formed on said other clamp half (12), which allows different positions for said male portion (24) to couple with said other clamp half (12).

5. The clamp assembly (10) according to any one of claims 1-4, wherein said male portion (24) comprises multiple straight edges (26, 28, 30, 32).

6. The clamp assembly (10) according to any one of claims 1-5, wherein said female portion (34) comprises multiple straight edges (36, 38, 40, 42).
